# EUROPÄISCHE PATENTANMELDUNG

(11) **EP 1 535 717 A1**
(43) Veröffentlichungstag der Anmeldung: **01.06.2005**
(21) Anmeldenummer: 04028240.2
(22) Anmeldetag: 29.11.2004
(51) Int. Cl.: B29C 47/70, B29C 47/06

(54) **Verfahren und Vorrichtung zum Herstellen von endlosen Extrudaten, insbesondere Strang- oder Hohlprofilen**

(30) Priorität: 28.11.2003 DE 10356354
(71) Anmelder: ETA Kunststofftechnologie GmbH, 53842 Troisdorf (DE)
(72) Erfinder: Burmann, Georg, 53721 Siegburg (DE); Wortberg, Johannes, Prof. Dr.-Ing., 45481 Mülheim an der Ruhr (DE)
(74) Vertreter: Cohausz & Florack

(57) **Zusammenfassung**

Dargestellt und beschrieben sind ein Verfahren und eine Vorrichtung zum Herstellen von endlosen Extrudaten, insbesondere Strang- oder Hohlprofilen, bei dem während des laufenden Betriebs Material- und Farbwechsel möglich sind. Um eine gezielte Verbesserung der Oberfläche des Extrudats sowohl im laufenden Betrieb als auch während und nach Produktumstellung zu ermöglichen, ist vorgesehen, dass zwischen Extruder und dem Schmelzeaustritt des Extrusionswerkzeuges eine Veränderung der Oberfläche bzw. der wandnahen Bereiche des herzustellenden Extrudats durch über den Umfang stattfindende Separation und Entnahme von Kunststoffschmelze erfolgt. Eine entsprechende Vorrichtung weist im Schmelzekanal zwischen Extruder und dem Schmelzeaustritt des Extrusionswerkzeuges wenigstens einen sich in Umfangsrichtung erstreckenden Spalt (2) auf, wobei der Spalt (2) mit einer Sammelleitung (3) verbunden ist, so dass zur Veränderung der Oberfläche des Extrudats durch den Spalt (2) Kunststoffschmelze separiert und durch einen Ablauf (5) entnommen werden kann.

## Beschreibung

Die Erfindung betrifft ein Verfahren und eine Vorrichtung zum Herstellen von endlosen Extrudaten, insbesondere Strang- oder Hohlprofilen, wobei zwischen Extruder und dem Schmelzeaustritt des Extrusionswerkzeuges eine Veränderung der Oberfläche bzw. der wandnahen Bereiche des herzustellenden Extrudats durch Separation und Entnahme von Kunststoffschmelze erfolgt.

Extrusionsanlagen zur Herstellung endloser Strang- bzw. Hohlprofile sind in vielerlei Ausführungen bekannt. Diese Profile können beliebige Querschnittsformen und Materialstärken bis hin zu dünnen Folien haben. Die so hergestellten Extrudate können aus thermoplastischen Kunststoffen oder anderen Materialien in einer beliebigen Farbe hergestellt werden, wobei in der Regel eine nicht eingefärbte Kunststoffschmelze mit Additiven, Füll- und/oder Verstärkungsstoffen, beispielsweise Farbstoffen (Farbmasterbatche) oder sonstigen Additiven wie beispielsweise Gleitmittel oder Stabilisatoren homogen miteinander vermischt wird.

Es ist klar, dass bei während des laufenden Betriebes vorgenommenen Material- oder Farbwechseln eine Durchspülung der Extrusionsanlage mit der neuen Polymerschmelze erfolgt, wobei in der Übergangsphase sowohl die Reste der alten als auch Anteile der neuen Polymerschmelze das Werkzeug verlassen. Gegebenenfalls wird die Anlage mit einem Zwischenprodukt (Reinigungsmaterial) gespült. Erst nach diesem Spülprozess wird ein neues Polymer oder entsprechend anders gefärbter Rohrstoff zugegeben. Bis zu einem wiederum homogenen Farbverlauf im Extrudat vergeht jedoch ein weiterer Zeitraum, so dass die während eines solchen Farbwechsels hergestellten Extrudate in der Regel keine Verkaufsqualität haben, sondern Minderqualitäten bzw. meist sogar nur Abfallprodukte darstellen. Man ist daher bemüht, die Zeiten für einen solchen Material- und/oder Farbwechsel so gering wie möglich zu halten, um den währenddessen produzierten Ausschuss weitmöglichst zu reduzieren.

Das Spül- und Materialverweilverhalten wird maßgeblich durch die langsam fließenden Rand- bzw. Grenzschichten zur Wandung des Extrusionswerkzeuges bestimmt. Die Oberfläche bzw. bei mehrschichtigen Extrudaten auch Grenzflächen bildenden Schmelzeanteile haben die längsten Verweilzeiten und bestimmen die Spülzeiten.

Eine gattungsgemäße Vorrichtung ist aus der JP59-002817 AA bekannt. Dort erfolgt die Entnahme von Kunststoffschmelze durch einen schmalen Schlitz. Diese abschnittsweise Separierung soll dazu führen, dass Ablagerungen an der Oberfläche des Exdrudats verhindert und das Fließverhalten auf beiden Seiten des Dornes vergleichmäßigt wird. Bei dieser bekannten Vorrichtung ist bei laufendem Betrieb keine Material- und Farbwechsel möglich.

Der Erfindung liegt daher die Aufgabe zugrunde, das eingangs genannte und zuvor näher beschriebene Verfahren und eine entsprechende Vorrichtung zum Herstellen von endlosen Extrudaten so auszugestalten und weiterzubilden, dass eine gezielte Verbesserung der Oberfläche des Extrudats sowohl im laufenden Betrieb als auch während und nach Produktumstellungen ermöglicht wird. Insbesondere sollen Ablagerungen aus Randschichtmaterial im Fließkanal und am Düsenaustritt bzw. im Extruderwerkzeug vermieden werden. Außerdem soll die Produktqualität des Extrudats durch Vermeidung von mechanisch, thermisch oder chemisch veränderten Oberflächen verbessert werden.

Verfahrensmäßig besteht die Lösung der Aufgabe darin, zwischen Extruder und dem Schmelzeaustritt des Extrusionswerkzeuges eine Veränderung der Oberfläche bzw. der wandnahen Bereiche des herzustellenden Extrudats durch über den gesamten Umfang stattfindende Separation und Entnahme von Kunststoffschmelze erfolgt.

Die Erfindung hat erkannt, dass der "Problembereich" während der laufenden Produktion und insbesondere bei einem Material- oder Farbwechsel in der äußeren Oberfläche und den wandnahen Bereichen des herzustellenden Extrudats zu sehen ist. Beim ständigen Betrieb kann eine Separierung und Entnahme wandnaher Schichten einer Kunststoffschmelze die Produktqualität des Extrudats verbessern, wenn in Folge der zeit- und temperaturabhängigen chemisch, physikalischen Stoffänderungen ein "Abschöpfen" der wandnahen Schichten über den gesamten Umfang des herzustellenden Extrudats dazu führt, dass beispielsweise keine abgebauten Oberflächenschichten ins Endprodukt gelangen. Der Spülvorgang geht nach Wegfall der Zudosierung von Masterbatch im Inneren des Schmelzestranges, also dem Bereich höherer Strömungsgeschwindigkeit der Schmelze, relativ schnell von statten geht, dauert an den Oberflächen der Fließkanäle jedoch relativ lange. Bei einem Farbwechsel von farbiger zu farbloser Polymerschmelze lassen sich am Extrudat an dessen äußerer Oberfläche noch relativ lang Farbschlierspuren erkennen. Diese können durch das erfindungsgemäße Verfahren vermieden werden.

Das erfindungsgemäße Verfahren ist nicht auf die Herstellung eines bestimmten Produktes beschränkt, vielmehr lässt es sich bei der Herstellung unterschiedlichster Produkte wie beispielsweise Strangprofile, Hohlprofile oder auch mehrschichtiger, coextrudierter Profile einsetzen. Bei letzteren ist es insbesondere auch möglich, gezielt Spülprozesse für innenliegende Grenzschichten zu beschleunigen, beispielsweise um bestimmte Schichthaftungsprobleme zu eliminieren.

Eine weitere Lehre der Erfindung sieht vor, dass der separierte Schmelzestrom wieder verwendet wird. Dazu kann er entweder zwischen Extruder und dem Bereich der Schmelzeseparation wieder in den Schmelzestrom zurück geführt oder unmittelbar dem den Schmelzestrom liefernden Extruder zugeführt werden.

Obwohl es in den meisten Fällen ausreicht, den Schmelzedruck zum Separieren der wandnahen Schmelze auszunutzen, kann auch eine Zwangsführung des entnommenen Schmelzestroms, beispielsweise mittels einer Pumpe, vorgesehen sein.

Vorrichtungsmäßig erfolgt die Lösung der Aufgabe dadurch, dass im Schmelzekanal zwischen Extruder und dem Schmelzeaustritt des Extrusionswerkzeuges wenigstens ein sich in Umfangsrichtung erstreckender Spalt vorgesehen ist und dass der Spalt als umlaufender Spalt ausgebildet und mit einem Kanalsystem verbunden ist, so dass zur Veränderung der Oberfläche des Extrudats durch den Spalt Kunststoffschmelze separiert und entnommen werden kann.

Erfindungsgemäß ist es nun möglich, beispielsweise bei einem Farbwechsel die äußere Oberfläche des Schmelzestranges zu entfernen, gewissermaßen "abzuschöpfen", so dass der Vorgang der Durchspülung deutlich verkürzt werden kann.

Weitere vorteilhafte Ausgestaltungen der Erfindung sind in den Unteransprüchen beschrieben.

Zum Erreichen einer gleichmäßigen Strömung des abgeführten Kunststoffschmelzematerials durch den umlaufenden Spalt muss dieser im Bereich der Oberfläche des Schmelzestranges eine gleichmäßige Stärke aufweisen, weitet sich dann aber bevorzugt, je nach den geometrischen Verhältnissen der sich an den Spalt anschließenden Kanalsysteme, entsprechend auf. So ist eine gleichmäßige Fließgeschwindigkeit des Kunststoffschmelzestromes durch den Spalt und damit eine gleichmäßige Entnahme von wandnaher Kunststoffschmelze sichergestellt.

Gemäß einer weiteren Lehre der Erfindung ist es auch möglich, dass jeder Spalt wenigstens in einem den Schmelzekanal angrenzenden Bereich von wenigstens einem porösen Formkörper ausgefüllt ist, dessen zum Schmelzekanal weisende Oberfläche der Geometrie des Schmelzekanals entspricht. Da die Menge des abzuschöpfenden wandnahen Schmelzematerials stets die gleiche ist, versteht es sich von selbst, dass in einem solchen Ausführungsfall der Spalt eine größere Breite aufweisen muss, um den porösen, durchlässigen Formkörper, beispielsweise ein poröses Keramikformteil, aufnehmen zu können. Die Erfindung umfasst dabei auch jegliche Kombinationen der vorstehend beschriebenen Ausführungsformen. So ist es möglich, den zur Abschöpfung vorgesehenen umlaufenden Spalt nur teilweise verbreitert auszuführen, um in diesen Bereichen poröse Formkörper einsetzen zu können.

Zur Zwangsführung der separierten und entnommenen Kunststoffschmelze kann eine Pumpe vorgesehen sein. Alternativ oder zusätzlich ist es ferner möglich, dass zur Steuerung des Volumenstroms der separierten und entnommenen Kunststoffschmelze ein oder mehrere einstellbare Ventile zum Erreichen einer Drosselfunktion vorgesehen sind.

Die Erfindung wird nachfolgend anhand einer lediglich bevorzugte Ausführungsbeispiele darstellenden Zeichnung näher erläutert. In der Zeichnung zeigen:
- Fig. 1: eine erste Ausführungsform der erfindungsgemäßen Vorrichtung im Querschnitt,
- Fig. 2: den Gegenstand aus Fig. 1 im Längsschnitt,
- Fig. 3: eine zweite Ausführungsform der erfindungsgemäßen Vorrichtung im Querschnitt,
- Fig. 4: den Gegenstand aus Fig. 3 im Längsschnitt,
- Fig. 5: eine dritte Ausführungsform der erfindungsgemäßen Vorrichtung im Querschnitt,
- Fig. 6: den Gegenstand aus Fig. 5 im Längsschnitt,

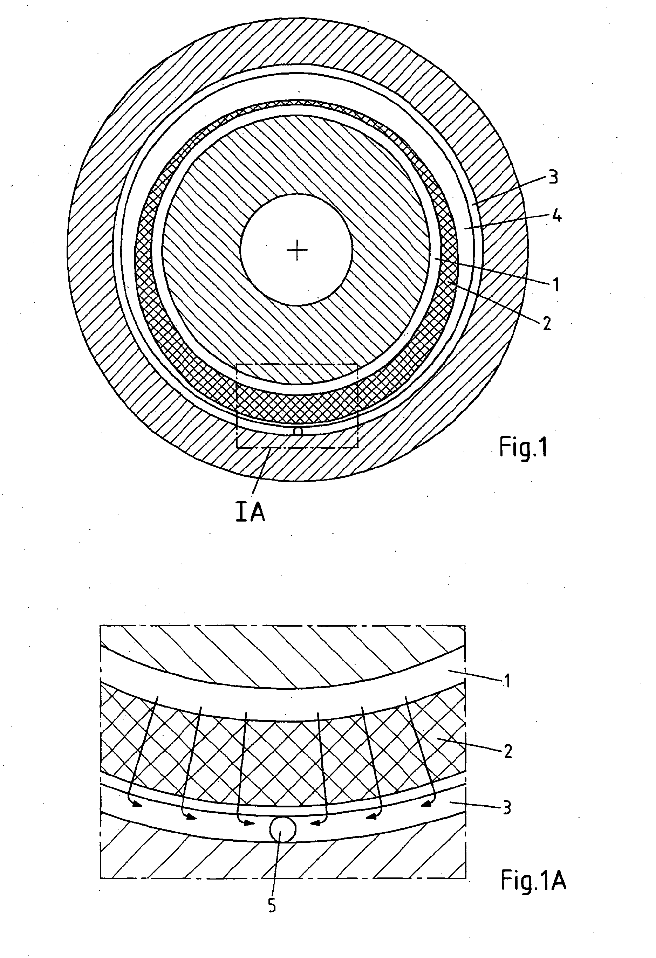

- Fig. 1A bis 6A: vergrößerte Detailansichten der vorgenannten Figuren,

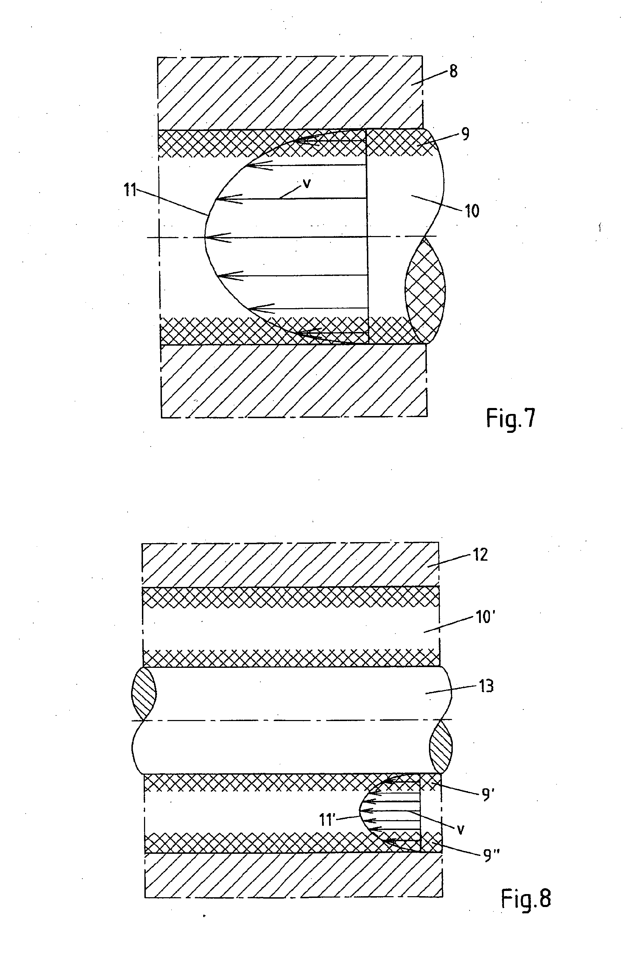

- Fig. 7: eine Skizze zur Erläuterung der Fließgeschwindigkeit in einer Rohrströmung,
- Fig. 8: eine Skizze zur Erläuterung der Fließgeschwindigkeit in einer Ringspaltströmung,

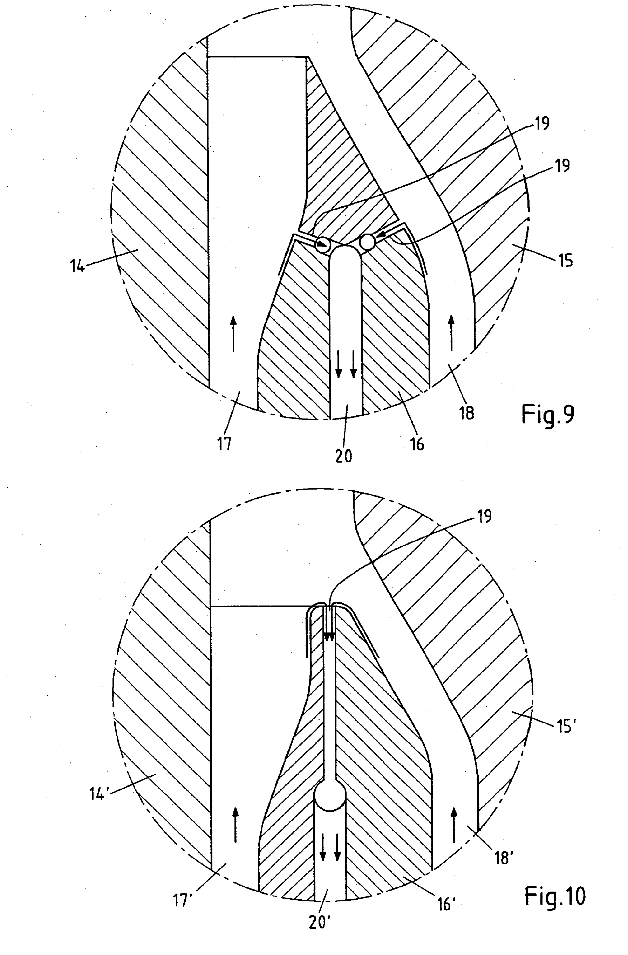

- Fig. 9: einen Ausschnitt einer weiteren Ausführungsform der erfindungsgemäßen Vorrichtung zur Veränderung von inneren Grenzflächen in einer ersten Alternative und
- Fig. 10: einen Ausschnitt einer weiteren Ausführungsform der erfindungsgemäßen Vorrichtung zur Veränderung von inneren Grenzflächen in einer zweiten Alternative.

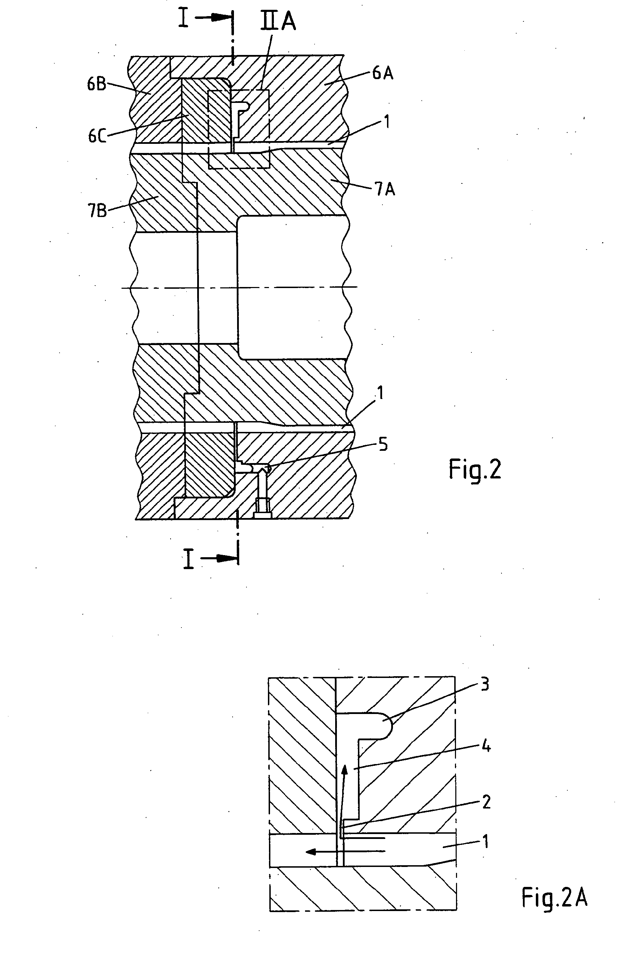

In den Fig. 1 und 2 ist eine Vorrichtung zur "Abschöpfung" der äußeren Oberfläche einer Strangschmelze 1 im Querschnitt (Fig. 1) bzw. Längsschnitt (Fig. 2) dargestellt. Die Wirkungsweise ist in den beiden vergrößerten Detailansichten Fig. 1A und Fig. 2A deutlich erkennbar. Vom Kanal der Strangschmelze 1 erstreckt sich senkrecht ein umlaufender Spalt 2 in Richtung einer Sammelleitung 3, wobei, wie insbesondere aus Fig. 1 ersichtlich, der Spalt 2 im Bereich der Oberfläche des Schmelzestranges 1 nach außen hin zunächst eine gleichbleibende Breite aufweist und sich dann in einem Bereich 4 bis zum Erreichen der Sammelleitung 3 aufweitet. Zur besseren Übersicht ist der "schmale" Bereich des Spalts 2 schraffiert dargestellt. Die Pfeile in Fig. 1A zeigen die Fließrichtung des Schmelzefilmes während des Abschöpfvorganges. Die in der Sammelleitung 3 befindliche Schmelze verlässt die Vorrichtung durch einen Ablauf 5, wie in den Fig. 1A und 2 erkennbar.

Im dargestellten und insoweit bevorzugten Ausführungsbeispiel ist ein Werkzeug für ein Hohlprofil gezeigt, dessen äußere Werkzeugformen mit 6A, 6B und 6C bezeichnet sind und das einen Kern aus Werkzeugteilen 7A und 7B enthält. Es ist schnell ersichtlich, dass sich die gezeigte erfindungsgemäße Vorrichtung hier auch für massive Strangprofile eignet, in denen der Schmelzestrom 1 nicht um einen Dorn oder Kern fließt. Dabei sind sowohl Extrusionswerkzeuge für die Herstellung von Rohrprofilen (Rohrströmungen) als auch Rechteckprofilen oder Profilen mit Sonderquerschnitten (Schlitzströmungen) möglich.

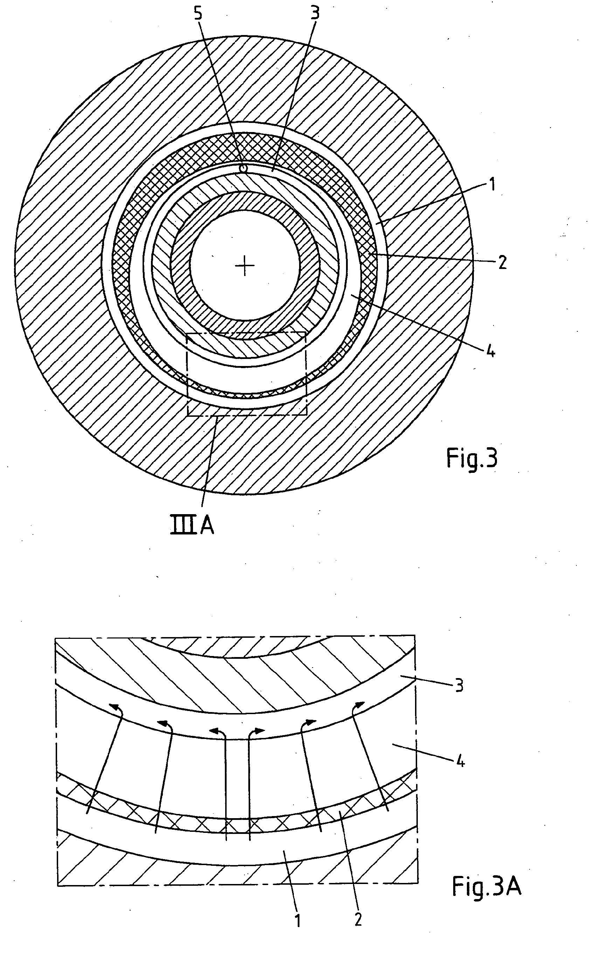

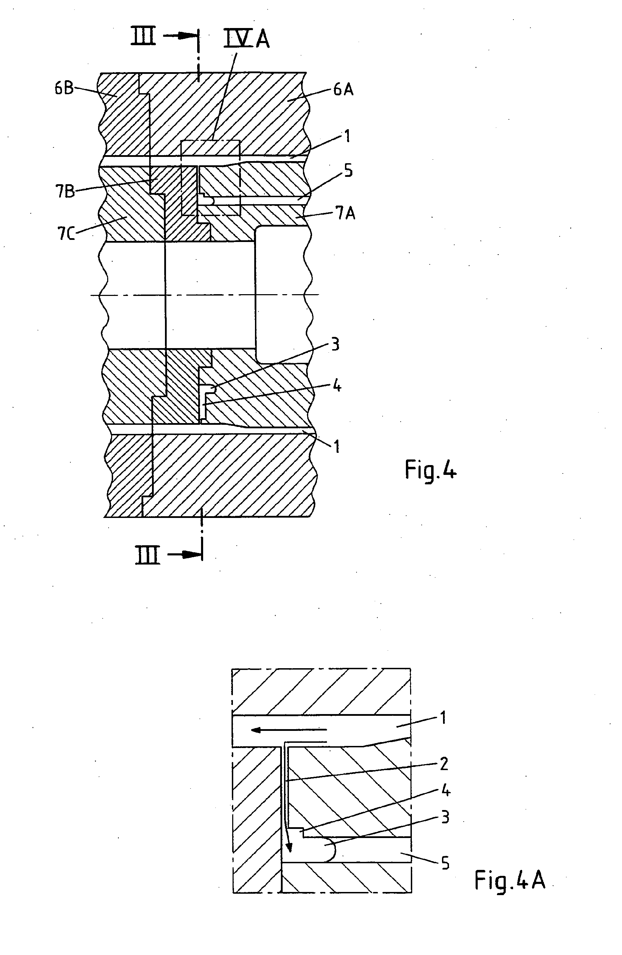

Die Fig. 3 und 4 zeigen mit im wesentlichen gleichen Bezugszeichen ein anderes erfindungsgemäßes Werkzeug, bei dem eine Abschöpfung der inneren Oberfläche eines ein Hohlprofil bildenden Schmelzestranges 1 erfolgt. Auch hier presst sich ein dünner Film der Schmelze 1 durch einen Spalt 2 und eine Sammelleitung 3 bis zu einem Ablauf 5, wobei auch hier, wie deutlich aus Fig. 3 erkennbar, zur Sammelleitung 3 hin eine Verbreiterung 4 des Spaltes 2 entsprechend den gewünschten Strömungsgeometrien erkennbar ist.

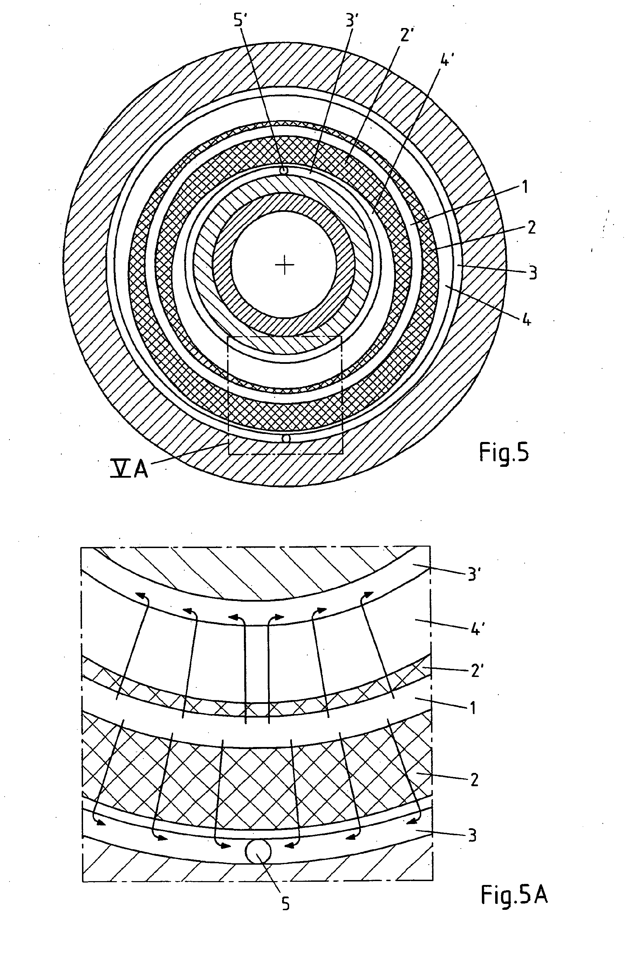

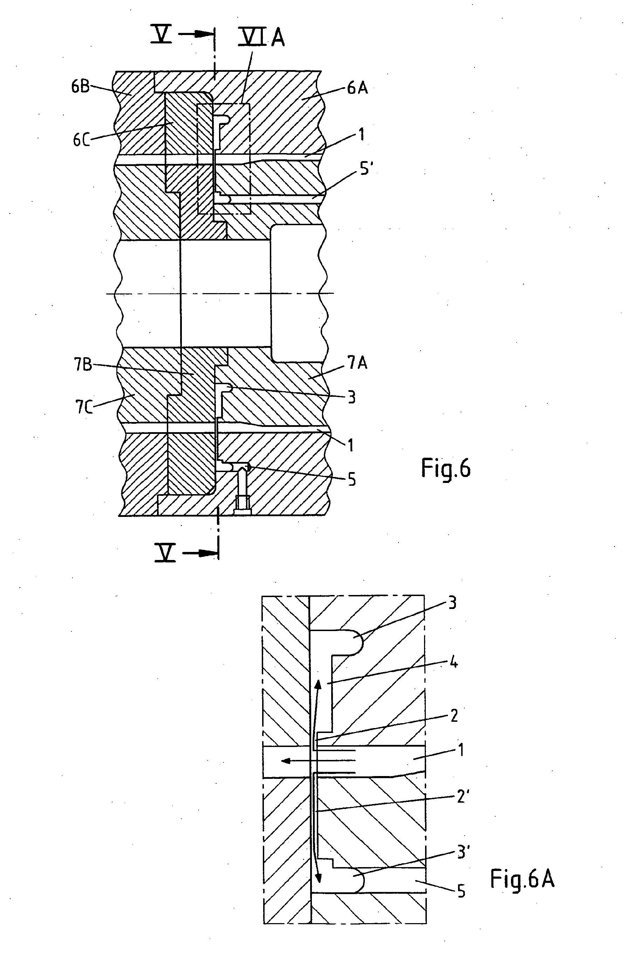

Die Fig. 5 und 6 zeigen eine Ausführung eines weiteren erfindungsgemäßen Werkzeuges, bei dem sowohl die innere als auch die äußere Oberfläche eines Schmelzestranges 1 abgeschöpft wird, und zwar nach außen über einen Spalt 2 bzw. 4, eine Sammelleitung 3 zu einem Ablauf 5 und nach innen über einen Spalt 2' bzw. 4', eine Sammelleitung 3' zu einem Ablauf 5'.

Die Fig. 7 und 8 zeigen skizzenhaft die "Problembereiche" in der äußeren Oberfläche und den wandnahen Bereichen des herzustellenden Extrudats, welche bei einem Materialoder Farbwechsel aufgrund der deutlich verminderten Fließgeschwindigkeit der Kunststoffschmelze für lange Spülzeiten verantwortlich sind.

Fig. 7 zeigt dabei zunächst im Querschnitt einen Ausschnitt eines Fließkanals in einem Extrusionswerkzeug 8. Durch diesen Fließkanal fließt ein an dessen Wandung einen deutlich langsamer strömenden wandnahen Bereich 9 aufweisender Kunststoffschmelzestrom 10. Zur besseren Darstellung der Fließgeschwindigkeiten ist ein Geschwindigkeitsprofil 11 mit einigen exemplarischen Geschwindigkeitspfeilen v in den Fließkanal des Extrusionswerkzeugs 8 hineingezeichnet dargestellt.

Fig. 8 zeigt die Geschwindigkeitsverteilung eines Schmelzestroms 10' in einem Extrusionswerkzeug mit einem Mundstück 12 und einem Dorn 13 zur Herstellung von Hohlprofilen. Hier sind die wandnahen Bereiche 9' und 9" des Schmelzestroms 10' und ein entsprechendes Geschwindigkeitsprofil 11' erkennbar.

In den Fig. 9 und 10 ist dargestellt, dass es mit der erfindungsgemäßen Vorrichtung auch möglich ist, mehrschichtige, coextrudierte Profile herzustellen, bei denen auch die Grenzschicht zwischen den einzelnen Schmelzeschichten veränderbar ist.

Ein solches Coextrusionswerkzeug weist dazu zwei äußere Werkzeugelemente 14, 15 und ein inneres Werkzeugteil 16 auf, die die Grenzen zweier Fließkanäle 17 und 18 bilden. Auf die bereits in den Fig. 1 bis 6A erläuterte Darstellung der Separation von Kunststoffschmelze der äußeren Kanalwandungen ist hier aus Gründen der Übersichtlichkeit bewusst verzichtet worden. Man erkennt deutlich, dass im inneren Werkzeugteil 16 im Bereich kurz vor dem Zusammentreffen beider Schmelzeströme 17 und 18 Spalte 19 vorgesehen sind. Durch die Separation und Entnahme von Kunststoffschmelze durch die Spalte 19 und die nachgeordnete Sammelleitung 20 ist es insbesondere auch möglich, gezielt beschleunigte Spülprozesse für innenliegende Grenzschichten durchzuführen, wodurch beispielsweise Schichthaftungsprobleme eliminiert werden können.

Schließlich zeigt Fig. 10 einen Ausschnitt eines weiteren Coextrusionswerkzeugs, bei dem anstelle der zuvor beschriebenen zwei separaten Spalte 19 nur ein einziger Spalt 19' vorgesehen sein kann, wenn dieser genau an der 'Nahtstelle' beider zusammengeführter Schmelzeströme 17' und 18' angeordnet ist. Der in der Schmelze vorhanden Druck reicht dabei aus, einen grenzschichtnahen Film beider Schmelzeströme 17' und 18' "abzuschöpfen". Die so separierte Schmelze kann dann über eine Sammelleitung 20" abgeführt werden, wobei eine weitere Verwendung aufgrund der Durchmischung unterschiedlicher Schmelzeinhalte in der Regel nicht mehr möglich ist.

## Patentansprüche

1. Verfahren zum Herstellen von endlosen Extrudaten, insbesondere Strang- oder Hohlprofilen, wobei zwischen Extruder und dem Schmelzeaustritt des Extrusionswerkzeuges eine Veränderung der Oberfläche bzw. der wandnahen Bereiche des herzustellenden Extrudats durch Separation und Entnahme von Kunststoffschmelze erfolgt,
**dadurch gekennzeichnet, dass** die Separation und Entnahme von Kunststoffschmelze über den gesamten Umfang der Oberfläche erfolgt.

2. Verfahren nach Anspruch 1,
**dadurch gekennzeichnet, dass** bei einem herzustellenden Strangprofil an der Oberfläche des Schmelzekanals eine wandnahe äußere Schmelzeschicht separiert und entnommen wird.

3. Verfahren nach Anspruch 1 ,
**dadurch gekennzeichnet, dass** bei einem herzustellenden Hohlprofil an der äußeren und/oder inneren Oberfläche eines Schmelzekanals eine wandnahe äußere und/oder innere Schmelzeschicht separiert und entnommen werden/wird.

4. Verfahren nach Anspruch 1 ,
**dadurch gekennzeichnet, dass** bei einem herzustellenden mehrschichtigen, coextrudierten Profil an den äußeren Oberflächen des Fließkanals und/oder an der Grenzschicht/den Grenzschichten des Schmelzestroms jeweils eine wandnahe bzw. grenzschichtnahe Schmelzeschicht separiert und entnommen werden kann.

5. Verfahren nach einem der Ansprüche 1 bis 4,
**dadurch gekennzeichnet, dass** durch die zu separierenden und zu entnehmenden Schmelzeschichten eine Veränderung der Grenzflächen innerhalb des mehrschichtigen Extrudats erfolgt.

6. Verfahren nach einem der Ansprüche 1 bis 5,
**dadurch gekennzeichnet, dass** die separierte Kunststoffschmelze dem Haupt-Schmelzestrom zwischen Extruder und dem Bereich der Schmelzeseparation wieder zugeführt wird.

7. Verfahren nach einem der Ansprüche 1 bis 5,
**dadurch gekennzeichnet, dass** die separierte und abgekühlte Kunststoffschmelze dem den Haupt-Schmelzestrom liefernden Extruder zugeführt wird.

8. Verfahren nach einem der Ansprüche 1 bis 7,
**dadurch gekennzeichnet, dass** die separierte und entnommene Kunststoffschmelze zwangsgefördert wird.

9. Vorrichtung zum Herstellen von endlosen Extrudaten, insbesondere Strang- oder Hohlprofilen, mit wenigstens einem Extruder und einem der Querschnittsform des herzustellenden Extrudats entsprechenden Extrusionswerkzeug,
**dadurch gekennzeichnet, dass** im Schmelzekanal zwischen Extruder und dem Schmelzeaustritt des Extrusionswerkzeuges wenigstens ein sich in Umfangsrichtung erstreckender Spalt (2, 2', 19, 19') vorgesehen ist und dass der Spalt (2, 2', 19, 19') als umlaufender Spalt ausgebildet und mit einem Kanalsystem (3, 3', 20, 20') verbunden ist, so dass zur Veränderung der Oberfläche des Extrudats durch den Spalt (2, 2', 19, 19') Kunststoffschmelze separiert und entnommen werden kann.

10. Vorrichtung nach Anspruch 9, wobei das hergestellte Extrudat ein Hohlprofil ist,
**dadurch gekennzeichnet, dass** an der äußeren und/oder der inneren Oberfläche des Hohlprofils ein sich in Umfangsrichtung erstreckender Spalt (2, 2') vorgesehen ist und dass jeder Spalt (2, 2') mit einem Sammelkanal (3, 3') zur Schmelzestromabfuhr in Verbindung steht.

11. Vorrichtung nach Anspruch 9, wobei das hergestellte Extrudat ein Strangprofil mit einem runden Querschnitt ist,
**dadurch gekennzeichnet, dass** jeder Spalt mit einem konzentrisch verlaufenden Sammelkanal in Verbindung steht.

12. Vorrichtung nach Anspruch 9, wobei das hergestellte Extrudat ein Strangprofil mit einem beliebigen Querschnitt ist,
**dadurch gekennzeichnet, dass** jeder Spalt mit einem dem Querschnitt des Strangprofils angepassten Sammelkanal in Verbindung steht.

13. Vorrichtung nach Anspruch 9, wobei das hergestellte Extrudat ein mehrschichtiges, coextrudiertes Profil ist,
**dadurch gekennzeichnet, dass** auch im Bereich der zu bildenden Grenzschicht/en wenigstens ein Spalt zur Separation und Entnahme von Kunststoffschmelze vorgesehen ist.

14. Vorrichtung nach Anspruch 13,
**dadurch gekennzeichnet, dass** jeder Spalt (19) als umlaufender Spalt im Inneren des Coextrusionswerkzeuges mit geringem Abstand vor der Schmelzestromzusammenführung angeordnet ist.

15. Vorrichtung nach Anspruch 13,
**dadurch gekennzeichnet, dass** der Spalt (19') als einziger umlaufender Spalt im Inneren des Coextrusionswerkzeuges unmittelbar im Bereich der Schmelzestromzusammenführung angeordnet ist.

16. Vorrichtung nach einem der Ansprüche 9 bis 15,
**dadurch gekennzeichnet, dass** jeder Spalt wenigstens in seinem den Schmelzekanal angrenzenden Bereich von wenigstens einem porösen Formkörper ausgefüllt ist, dessen zum Schmelzekanal weisenden Oberflächen der Geometrie des Schmelzekanals entspricht.

17. Vorrichtung nach Anspruch 16,
**dadurch gekennzeichnet, dass** jeder Sammelkanal (3, 3') wenigstens einen Ablauf (5, 5') aufweist.

18. Vorrichtung nach Anspruch 16,
**dadurch gekennzeichnet, dass** jeder Spalt (2, 2') eine gleich große Spaltbreite aufweist und dass der Querschnitt des Sammelkanals (3, 3') mit größer werdendem Abstand zum Ablauf (5, 5') vergrößert ausgebildet ist zur Oberfläche des Schmelzestrangs (1) hin eine gleichmäßige Spaltbreite aufweist.

19. Vorrichtung nach Anspruch 16 oder 17,
**dadurch gekennzeichnet, dass** jeder Spalt zur Oberfläche des Schmelzestrangs hin eine variable Spaltbreite aufweist.

20. Vorrichtung nach einem der Ansprüche 9 bis 19,
**dadurch gekennzeichnet, dass** zur Zwangsführung der separierten und entnommenen Kunststoffschmelze eine Pumpe vorgesehen ist.

21. Vorrichtung nach einem der Ansprüche 9 bis 20,
**dadurch gekennzeichnet, dass** zur Steuerung des Volumenstroms der separierten und entnommenen Kunststoffschmelze wenigstens ein einstellbares Ventil vorgesehen ist.
